Europäisches Patentamt

European Patent Office

Office européen des brevets

(11) Veröffentlichungsnummer: **0 031 047**
**B1**

(12) **EUROPÄISCHE PATENTSCHRIFT**

(45) Veröffentlichungstag der Patentschrift:
01.02.84

(21) Anmeldenummer: 80107436.0

(22) Anmeldetag: 27.11.80

(51) Int. Cl.³: **H 02 K 1/28, H 02 K 21/08**

(54) Dauermagneterregter Läufer für eine Synchronmaschine.

(30) Priorität: 12.12.79 DE 2950008

(43) Veröffentlichungstag der Anmeldung:
01.07.81 Patentblatt 81/26

(45) Bekanntmachung des Hinweises auf die Patenterteilung:
01.02.84 Patentblatt 84/5

(84) Benannte Vertragsstaaten:
DE FR GB IT NL

(56) Entgegenhaltungen:
AT - B - 184 978
US - A - 2 719 931

(73) Patentinhaber: SIEMENS AKTIENGESELLSCHAFT,
Berlin und München Wittelsbacherplatz 2,
D-8000 München 2 (DE)

(72) Erfinder: Adelski, Hans-Joachim, Saaleblick 13,
D-8741 Salz (DE)
Erfinder: Pflaugner, Josef, Raiffeisenstrasse 9,
D-8741 Wülfershausen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Dauermagneterregter Läufer für eine Synchronmaschine

Die Erfindung bezieht sich auf einen dauermagneterregter Läufer für eine Synchronmaschine, der einen Kurzschlußkäfig mit auf beiden Stirnseiten angeordneten Kurzschlußringen besitzt und dessen gegen Fliehkraftbeanspruchung gesichertes Blechpaket sich vorzugsweise radial erstreckende Schlitze zur Aufnahme der Dauermagnete aufweist.

Ein solcher Läufer ist durch die DE-A-2 412 307 bekannt. Bei diesem Läufer sind die einzelnen Segmente des Blechpaketes durch formschlüssige Hinterschneidungen an der Welle gehalten. Die in den radialen Schlitzen eingefügten Dauermagnete werden bei diesem Läufer nach dem Gießen des Kurzschlußkäfigs von außen magnetisiert.

Durch das DE-U-7 726 439 ist es bekannt, die radial verlaufenden Schlitze am Außenumfang durch einen schmalen Streusteg zu verschließen, welcher gleichzeitig die Blechpaketsegmente zusammenhält und damit gegen Fliehkraftbeanspruchung sichert. Eine derartige Sicherung ist wesentlich einfacher als eine formschlüssige Befestigung der Blechpaketsegmente an der Läuferwelle.

Werden die radialen Schlitze am Außenumfang des Läufers geschlossen ausgebildet, so müssen die Dauermagnete in axialer Richtung in die Schlitze eingeschoben werden. Ein Einbringen der Dauermagnete in radialer Richtung von der Wellenöffnung her scheidet in der Regel aus, da die radiale Länge der Dauermagnete meist größer ist als der Durchmesser der Wellenöffnung. Das axiale Einschieben der Dauermagnete muß allerdings vor dem Herstellen des Kurzschlußkäfigs und der Kurzschlußringe erfolgen, da die Schlitze durch die Kurzschlußringe verdeckt werden. Vor dem Gießen des Kurzschlußkäfigs in die Schlitze eingesetzte Dauermagnete werden durch die starke Wärmeentwicklung beim Gießen des Kurzschlußkäfigs abmagnetisiert und müssen daher nochmals von außen aufmagnetisiert werden. Ein solches nachträgliches Aufmagnetisieren ist bei höherpoligen Läufern (sb 6polig) und generell bei Verwendung von Seltenerdmagneten nicht möglich.

Der Erfindung liegt die Aufgabe zugrunde, einen dauermagneterregten Läufer für eine Synchronmaschine zu schaffen, bei dem auf einfache Weise eine hohe Festigkeit des Blechpaketes gegen Fliehkraftbeanspruchung erreicht wird und außerdem die volle Magnetkraft der Dauermagnete auch bei einem im Gießverfahren hergestellten Kurzschlußkäfig erhalten bleibt.

Die Lösung der gestellten Aufgabe gelingt nach der Erfindung dadurch, daß die Schlitze am Außenumfang des Läufers geschlossen sind und an einem Kurzschlußring oder an beiden Kurzschlußringen wechselweise Aussparungen vorgesehen sind, die die Schlitze in axialer Richtung freigeben.

Durch die am Außenumfang geschlossenen Schlitze werden die einzelnen Blechpaketsegmente auch bei hohen Fliehkräften sicher zusammengehalten. Da die radialen Schlitze wegen der Aussparungen in den Kurzschlußringen axial zugänglich bleiben, können die vormagnetisierten Dauermagnete nach dem Gießen des Kurzschlußkäfigs in axialer Richtung in die Schlitze eingeschoben werden. Somit bleibt die volle Magnetkraft der Dauermagnete erhalten.

Dadurch, daß bei einer die radiale Breite der Kurzschlußringe überschreitenden radialen Länge der Dauermagnete die Kurzschlußringe in Segmente unterteilt sind, wobei sich jedes Segment von einem Schlitz bis zum übernächsten Schlitz erstreckt und die Segmente auf der einen Stirnseite gegenüber den Segmenten auf der anderen Stirnseite in Umfangsrichtung jeweils um eine dem Abstand zwischen zwei Schlitzen entsprechende Bogenlänge versetzt sind, kann die volle radiale Stärke des Blechpaketes für die Anordnung der Dauermagnete genutzt werden.

Nach einer weiteren Ausgestaltung der Erfindung wird eine Materialersparnis beim Herstellen des Kurzschlußkäfigs dadurch erreicht, daß bei einer gegenüber der radialen Stärke des Blechpaketes kürzeren radialen Länge der Schlitze, die radiale Tiefe der Aussparungen gleich der radialen Länge der Schlitze ist, wobei beide Kurzschlußringe eine der halben Anzahl der Schlitze entsprechende Anzahl von Aussparungen aufweisen, mäanderförmig ausgebildet und in Umfangsrichtung um eine dem Abstand zwischen zwei Schlitzen entsprechende Bodenlänge gegeneinander versetzt sind. Durch die Mäanderform wird das Volumen der Kurzschlußringe reduziert und damit eine Materialeinsparung erreicht.

Eine Materialersparnis und gleichzeitig eine Vereinfachung des Gußwerkzeuges ergibt sich dadurch, daß bei einer gegenüber der radialen Stärke des Blechpaketes kürzeren radialen Länge der Schlitze die radiale Tiefe der Aussparungen gleich der radialen Länge der Schlitze ist, wobei nur an einem Kurzschlußring eine der Anzahl der Schlitze entsprechende Anzahl von Aussparungen vorgesehen ist und die zwischen den Aussparungen nach außen ragenden Segmentteile des Kurzschlußringes mit einem Innenring verbunden sind.

Anhand eines in der Zeichnung dargestellten Ausführungsbeispieles wird der Anmeldungsgegenstand nachfolgend näher beschrieben.

Es zeigt

Fig. 1 einen Läufer mit in Segmente unterteilten Kurzschlußringen in perspektivischer Darstellung,

Fig. 2 eine Stirnansicht eines Läufers mit mäanderförmigem Kurzschlußring,

Fig. 3 eine Stirnansicht eines Läufers, bei dem nur an einem Kurzschlußring eine der Anzahl der Schlitze entsprechende Anzahl von Aussparungen vorgesehen ist.

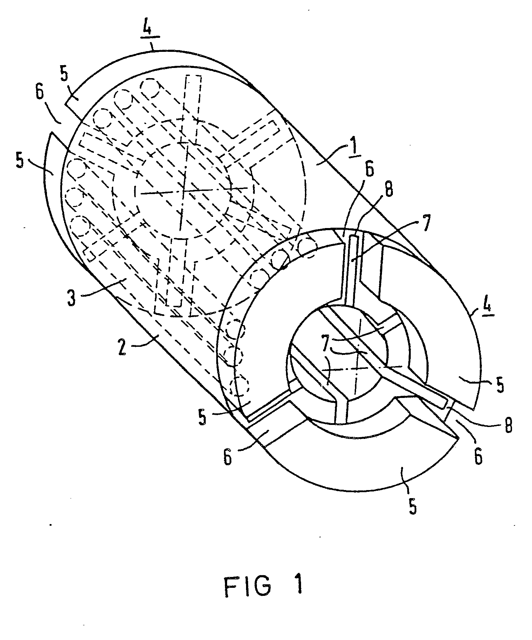

In Fig. 1 ist mit 1 ein geblechter Läufer bezeichnet, dessen Blechpaket 2 mit einem Kurzschlußkäfig 3 versehen ist. Die zu dem Kurzschlußkäfig 3 gehörenden Kurzschlußringe 4 sind jeweils in drei Segmente 5 unterteilt. Zwischen den einzelnen Segmenten 5 werden somit Aussparungen 6 gebildet. Im Bereich der Aussparungen 6 sind im Blechpaket 2 sich radial erstreckende Schlitze 7 vorgesehen. In axialer Richtung reichen die Schlitze 7 über die volle Länge des Blechpaketes. Am Außenumfang des Läufers 1 sind die Schlitze 7 durch schmale Stege 8 verschlossen. Diese schmalen Stege 8 können angestanzte Stege sein oder auch aus amagnetischem Material bestehen, das nachträglich angeschweißt wird. In die radialen Schlitze 7 werden Dauermagnete eingesetzt. Diese Dauermagnete können zwischen den Aussparungen 6 hindurch in axialer Richtung in die Schlitze 7 eingeschoben werden.

Die Länge der Segmente 5 der Kurzschlußringe 4 ist so bemessen, daß sich diese Segmente von einem bis zu dem übernächsten Schlitz erstrecken. Außerdem sind die Segmente 5 des einen Kurzschlußringes in Umfangsrichtung gegenüber den Segmenten 5 des anderen Kurzschlußringes 4 jeweils um eine dem Abstand zwischen zwei Schlitzen 7 entsprechende Bogenlänge versetzt. Auf diese Weise wird trotz der vollkommen voneinander getrennten Segmenten 5 der beiden Kurzschlußringe 4 über den gesamten Umfang des Läufers 1 ein Kurzschlußkreis erzielt. Die Dauermagnete werden bei dieser Ausführungsform des Läufers jeweils zur Hälfte von der einen und von der anderen Seite in die Schlitze 7 eingeschoben. Der beschriebene konstruktive Aufbau des Läufers schafft die Möglichkeit, die Schlitze 7 am Außenumfang des Läufers 1 aus Festigkeitsgründen geschlossen ausführen und den Kurzschlußkäfig im Gießverfahren herstellen zu können, ohne daß Einbußen im Hinblick auf die magnetischen Eigenschaften der Dauermagnete in Kauf genommen werden müssen.

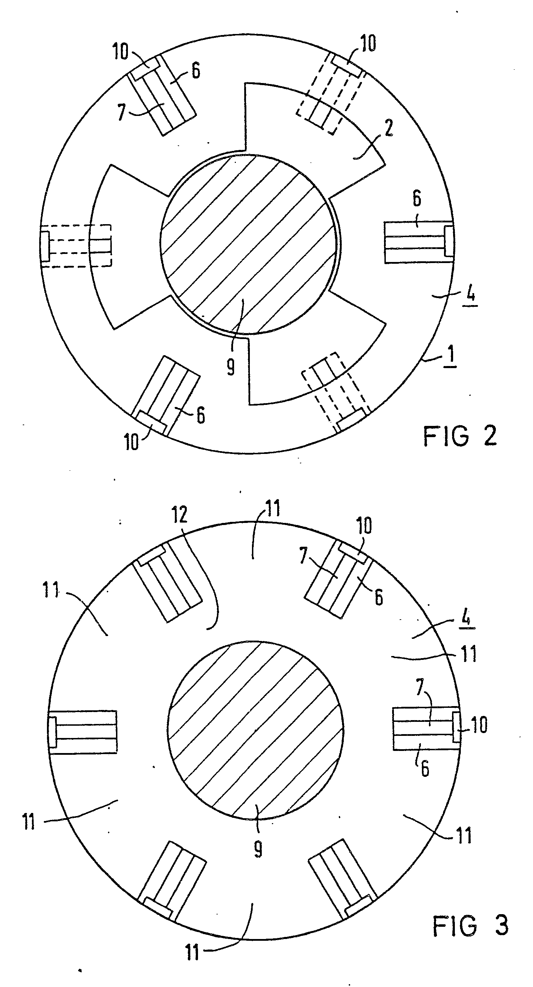

Bei dem in Fig. 2 dargestellten Läufer erstrecken sich die radialen Schlitze 7 nur über einen Teil der radialen Stärke des Blechpaketes 2. Die radiale Tiefe der Aussparung 6 entspricht bei dieser Ausführungsform der Länge der Schlitze 7. Der Kurzschlußring 4 kann daher in dem Bereich zwischen den Schlitzen 7 und der Welle 9 weiter geführt werden. Da der Kurzschlußring 4 nur eine der halben Anzahl der Schlitze 7 entsprechende Anzahl von Aussparungen 6 aufweist, kann der Kurzschlußring zur Materialersparnis mäanderförmig ausgeführt werden. Der auf der anderen Läuferstirnseite angeordnete Kurzschlußring 4 wird ebenfalls mäanderförmig ausgeführt und in Umfangsrichtung um eine dem Abstand zwischen zwei Schlitzen 7 entsprechende Bogenlänge versetzt. Die Dauermagnete werden jeweils zur Hälfte von der einen und anderen Seite in die Schlitze 7 des Blechpaketes 2 eingeschoben. Am Außenumfang des Läufers 1 ist über den Schlitzen 7 jeweils eine Ausnehmung 10 vorgesehen. In diese Ausnehmung 10 wird ein Stab aus amagnetischem Material eingeschweißt. Das Einschweißen des Stabes muß ebenfalls vor dem Einbringen der Magnete geschehen. Durch die beim autogenen Schweißen entstehende starke Erwärmung würden die vorher in die Schlitze 7 eingesetzten Dauermagnete wieder abmagnetisiert und damit die Leistungsfähigkeit der Maschine beeinträchtigt. Auch ein Schweißen mittels Elektronenstrahl ist nach dem Einsetzen der Dauermagnete nicht möglich, da der Elektronenstrahl durch das Magnetfeld der Magnete abgelenkt wird und somit kein einwandfreies Schweißen möglich ist.

Bei einem Läufer gemäß Fig. 3, bei dem die radialen Schlitze 7 sich ebenfalls nur über einen Teil der radialen Stärke des Blechpaketes 2 erstrecken, können die in ihrer radialen Tiefe den Schlitzen 7 angepaßten Aussparungen 6 alle an einem Kurzschlußring 4 vorgesehen werden. Die zwischen die Aussparung 6 ragenden Segmentteile 11 des Kurzschlußringes 4 sind hierbei mit einem die Welle 9 umschließenden Innenring 12 verbunden. Bei einer solchen Ausführungsform des Kurzschlußringes 4 braucht nur einer der beiden Kurzschlußringe in dieser Form ausgeführt zu werden, wohingegen der andere Kurzschlußring seine übliche Form erhalten kann.

**Patentansprüche**

1. Dauermagneterregter Läufer (1) für eine Synchronmaschine, der einen Kurzschlußkäfig (3) mit auf beiden Stirnseiten angeordneten Kurzschlußringen (4) besitzt und dessen gegen Fliehkraftbeanspruchung gesichertes Blechpaket sich vorzugsweise radial erstreckende Schlitze (7) zur Aufnahme der Dauermagnete aufweist, dadurch gekennzeichnet, daß die Schlitze (7) am Außenumfang des Läufers (1) geschlossen sind und an einem Kurzschlußring (4) oder an beiden Kurzschlußringen (4) wechselweise Aussparungen (6) vorgesehen sind, die die Schlitze (7) in axialer Richtung freigeben

2. Läufer nach Anspruch 1, dadurch gekennzeichnet, daß bei einer die radiale Breite der Kurzschlußringe (4) überschreitenden radialen Länge der Dauermagnete die Kurzschlußringe (4) in Segmente (5) unterteilt sind, wobei sich jedes Segment (5) von einem Schlitz (7) bis zum übernächsten Schlitz (7) erstreckt und die Segmente (5) auf der einen Stirnseite gegenüber den Segmenten (5) auf der anderen Stirnseite in Umfangsrichtung jeweils um eine dem Abstand zwischen zwei Schlitzen (7) entsprechende Bogenlänge versetzt sind.

3. Läufer nach Anspruch 1, dadurch gekennzeichnet, daß bei einer gegenüber der radialen Stärke des Blechpaketes (2) kürzeren radialen Länge der Schlitze (7) die radiale Tiefe der Aussparungen (6) gleich der radialen Länge der Schlitze (7) ist, wobei beide Kurzschlußringe (4) eine der halben Anzahl der Schlitze (7) entsprechende Anzahl von Aussparungen (6) aufweisen, mäanderförmig ausgebildet und in Umfangsrichtung um eine dem Abstand zwischen zwei Schlitzen (7) entsprechende Bogenlänge gegeneinander versetzt sind.

4. Läufer nach Anspruch 1, dadurch gekennzeichnet, daß bei einer gegenüber der radialen Stärke des Blechpaketes (2) kürzeren radialen Länge der Schlitze (7) die radiale Tiefe der Aussparungen (6) gleich der radialen Länge der Schlitze (7) ist, wobei nur an einem Kurzschlußring (4) eine der Anzahl der Schlitze (7) entsprechende Anzahl von Aussparungen (6) vorgesehen ist und die zwischen den Aussparungen (6) nach außen ragenden Segmentteile (11) des Kurzschlußringes (4) mit einem Innenring (12) verbunden sind.

## Claims

1. A rotor (1) for a synchronous machine, which is excited by permanent magnets, and which has a squirrel cage (3) having short-circuiting rings (4) arranged at both end faces, and whose laminated core, which is protected against stresses produced by centrifugal force, has slots (7) which preferably extend radially and which serve to reseive the permanent magnets, characterised in that the slots (7) are closed at the outer periphery of the rotor (1) and openings (6), which free the slots (7) in the axial direction, are arranged at one short-circuit ring (4), or alternately at both short-circuit rings (4).

2. A rotor according to Claim 1, characterised in that in the case where the permanent magnets have a radial length which exceeds the radial width of the short-circuit rings (4), the short-circuit rings (4) are divided into segments (5), each segment (5) extending from one slot (7) to the next-but-one slot (7), and the segments (5) on one end face being respectively displaced in the peripheral direction in relation to the segments (5) of the other end face, through an are arc of length corresponding to the spacing between two slots (7).

3. A rotor according to Claim 1, characterised in that in the case where the slots (7) have a radial length which is shorter compared with the radial thickness of the laminated core (2), the radial depth of the openings (6) is equal to the radial length of the slots (7), both short-circuit rings (4) having a number of openings (6) which corresponds to half the number of the slots (7), and both short-circuit rings being serpentine in shape and staggered in the peripheral direction with respect to one another, through an arc of length corresponding to the spacing between two slots (7).

4. A rotor according to Claim 1, characterised in that in the case where the slots (7) have a radial length which is shorter compared with the radial thickness of the laminated core (2), the radial depth of the recesses (6) equals the radial length of the slots (7), a number of recesses (6) corresponding to the number of slots (7) being arranged only on one short-circuit ring (4) and the segment parts (11) of the short-circuit ring (4), which project outwardly between the recesses (6), being connected to an inner ring (12).

## Revendications

1. Rotor (1) à excitation par aimants permanents pour une machine synchrone, comportant une cage d'écureuil (3) avec des bagues de court-circuit (4) disposées sur les deux côtés frontaux de dont le paquet de tôles assuré contre les contraintes de la force centrifuge comporte des fentes (7) s'étendant de préférence radialement pour recevoir les aimants permanents, caractérisé par le fait que les fentes (7) sont fermées à la périphérie extérieure du rotor (1) et que sur une bague de court-circuit (4) ou sur les deux bagues de court-circuit (4) sont prévues des encoches alternées (6) qui dégagent les fentes (7) dans la direction axiale.

2. Rotor selon la revendication 1, caractérisé par le fait que pour une longueur radiale des aimants permanents qui dépasse la largeur radiale des bagues de court-circuit (4), celles-ci sont subdivisées en segments (5), chaque segment (5) s'étendant d'une fente (7) jusqu'à la seconde fente suivante (7) et les segments (5) sur un côté frontal étant décalés dans le sens périphérique par rapport aux segments (5) sur l'autre côté frontal d'une longueur d'arc qui correspond à la distance entre deux fentes (7).

3. Rotor selon la revendication 1, caractérisé par le fait que pour une longueur radiale des fentes (7) qui est plus courte que l'épaisseur radiale des paquets de tôle (2), la profondeur radiale des encoches (6) est égale à la longueur radiale des fentes (7), les deux bagues de court-circuit (4) comportant un nombre d'encoches (6) qui correspond à la moitié du nombre de fentes (7), étant réalisées en forme de méandres et étant décalées entre elles, dans le sens périphérique, d'une longueur d'arc qui correspond à la distance entre deux fentes (7).

4. Rotor selon la revendication 1, caractérisé par le fait que pour une longueur radiale des fentes (7), plus courte que l'épaisseur radiale des paquets de tôles (2), la profondeur radiale des encoches (6) est égale à la longueur radiale des fentes (7), un nombre d'encoches (6) qui correspond au nombre de fentes (7) n'étant prévues que dans une bague de court-circuit (4) et les parties (11) des segments de la bague de court-circuit (4) qui débordent vers l'extérieur, entre les encoches (6), étant reliées avec une bague intérieure (12).

FIG 1

FIG 2

FIG 3